# EUROPEAN PATENT APPLICATION

(11) **EP 4 471 415 A1**
(43) Date of publication of application: **04.12.2024**
(21) Application number: 23176647.8
(22) Date of filing: 01.06.2023
(51) Int. Cl.: G01N 27/28, H03M 1/66, G01N 21/77

(54) **ELECTRONIC DEVICE CONFIGURED TO CONVERT ELECTRO-OPTICAL GAS SENSOR DATA INTO AN ANALOG SIGNAL**

(71) Applicant: Digital Gas Measurement Aps, 8830 Tjele (DK)
(72) Inventor: Popowicz, Grzegorz, 85359 Freising (DE); Krzysztof, Adamski, 51642 Wroclaw (PL)

(57) **Abstract**

The invention relates to an electronic device configured for conversion of a digital signal received from at least one gas sensor containing digital signal processing, into an analog signal that is compatible with devices that were designed to work with sensors based on electro-galvanic fuel cell principle.

## Description

The present invention relates to an electronic device configured for conversion of a digital signal received from at least one gas sensor containing digital signal processing, into an analog signal that is compatible with devices that were designed to work with sensors based on electro-galvanic fuel cell principle.

Detection of gas partial pressure or concentration of analyte gas, especially oxygen, in the gaseous or liquid medium is often done using electro-galvanic fuel cells that deliver voltage signals by chemical reaction of the internal electrodes with analyte gas. The voltage signal is often corrected or linearized by a passive electronic circuit composed of temperature-sensitive elements and resistors.

The output voltage signal of electro-galvanic fuel cells is typically in the range of 1-200 mV. The sensors deliver low current, typically below 1 mA. The voltage signal is delivered to a receiving device that converts the voltage of the sensor into a numerical value of analyte gas concentration. The receiving device can then display the measured values in analog or digital form. The receiving device can use the analyte gas concentration to control gas supply in order to stabilize and maintain constant value of the analyte or perform programmed changes in the analyte concentration in the medium. The electro-galvanic fuel cells sensors suffer from short lifetime, typically one to two years. They are also sensitive to temperature, humidity, mechanical stress and prone to damage. Aging sensor delivers lower voltage for the same analyte concentration. Therefore, electro-galvanic fuel cells sensor - based measurement and control equipment need to be calibrated frequently using standardized gasses.

A second class of gas sensors, are based on fluorescence quenching of a layer of chemical substance, typically porphyrin based. Those gas sensors are also called electro-optical gas sensors. This type of sensor measures the fluorescence light quenching of the gas sensitive layer using an excitation pulse of light followed by subsequent measurement of fluorescence. Electro-optical gas sensors have better accuracy, slower aging and require less frequent calibration. The optical quenching sensors require digital signal processing to calculate analyte gas concentration from the observed fluorescence quenching signal. The conversion is typically done by a microprocessor-based circuit configured to convert the observed light signal into a digital form and handles necessary calculations. This might include time-resolved signal analysis, temperature calibration, light pulse power calibration, reference signal subtraction. These sensors output oxygen concentration in a form of logical data signal, typically using serial communication protocol. The optical sensors are thus not compatible with data presentation and gas concentration control devices designed to operate with electro-galvanic fuel cells sensors.

The present invention is related to a device configured to convert the digital signal from an electro-optical sensor into a voltage signal emulating electro-galvanic fuel cells sensors. The benefit of the disclosed device is a possibility of connecting electro-optical sensors to devices designed to operate with electro-galvanic fuel cells sensors. The devices for data presentation and gas concentration control designed to work with electro-galvanic fuel cells sensors are abundant on the market. The disclosed invention allows them to continue operation with the more reliable electro-optical sensors.

The present invention relates to an electronic device as defined in appendant claim 1. Preferred embodiments are defined in the dependent claims.

A concentration of measured analyte gas in gaseous or liquid medium is measured by an electro-optical, fluorescence quenching principle. Typically, metallo-organic compounds, for example metalloporphyrins, are used as sensing molecules.

The measurement of the time of the fluorescence decay from the sensing molecule allows for calculation of the analyte gas concentration or partial pressure. This typically involves digital signal processing and microprocessor-based calculations.

The value of analyte gas concentration or partial pressure is then supplied in a form of digital signal. Typically using serial communication protocol.

The present invention is a device configured to receive the analyte gas concentration in a form of digital signal and convert it into an analog signal emulating electro-galvanic fuel cell sensors.

The present invention may relate to a digital to analog converter providing voltage or current output based on received oxygen concentration.

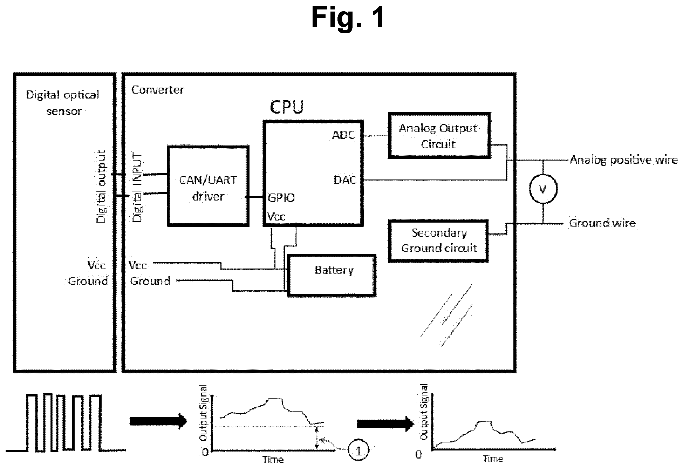

An example block design of an embodiment of the invention is shown on Figure 1. All components may be realized within one microprocessor device.

Data receiving circuit is an electronic device configured to receive digital signals from electro-optical gas sensors. This is typically a series of timed voltage pulses organized in standardized form of serial or parallel communication.

A data processing unit is a device configured to recalculate values obtained from receiving circuits and provide digital interpretation of output signals. This might involve correction of signal linearity, temperature correction or introduction of additional signaling like low battery signal or device failure signal.

The digital to analog converter sets the voltage output to the value requested by the signal processing unit. This might involve digital-to-analog conversion, additional signal conditioning and feedback circuit checking if the output is in accordance with the value set by the signal processing unit.

The output analog value might utilize a secondary ground signal at a different voltage level than the gas sensor and digital input (Figure 1, marker 1).

The present invention might be incorporated into electro-optical sensor electronics and be realized within one microprocessor device.

Features described in relation to one embodiment may equally be applied to other embodiments of the invention.

The invention will be further described, by way of example only, with reference to the accompanying drawings in which:
Fig. 1 shows a block diagram example embodiment of the invention. A single processor circuit is used as a digital input, data processing and analog output circuit. The external secondary ground circuit provides a secondary ground to enable generation of signals close to 0V otherwise unavailable without complex analog circuitry. Bottom panel show functional scheme of the invention example embodiment. Digital, serial signal is converted to analog output in real time and secondary ground, indicated as 1, ensures that 0 V level can be reached.

## Claims

1. An electronic device configured to convert a digital signal received from an electro-optical gas sensor into an analog signal, wherein the analog signal is a simulated output signal of an electro-galvanic fuel cell sensor.

2. The device according to claim 1, comprising a digital data receiving circuit, and at least one data processing unit.

3. The device according to any of the preceding claims, wherein the device is further configured to receive information related to a measured gas concentration in any digital form, preferably wherein the digital form is serial UART, CAN, I2C, 2-wire or a parallel digital signal, and wherein the device is configured to convert the information about the measured gas concentration into a voltage or current signal, preferably wherein one or both the voltage signal is in the range of 1-200 mV,
and the gas concentration is an oxygen concentration.

4. The device according to any of the preceding claims, wherein a voltage output of the device is dependent on values transmitted to a digital input.

5. The device according to any of the preceding claims, wherein the device is further configured to receive status information from a digital sensor, and wherein the device is configured to convert the status information into a pre-defined analog output, preferably wherein the status information is one or more of a low battery status or at least one error status of the electro-optical gas sensor, and wherein the status information is converted into voltage value outside normal measurement range.

6. The device according to any of the preceding claims, wherein the device is configured to perform measurements related to a state of a measured medium, preferably a gas concentration, more preferably an oxygen concentration, resulting in parameters, and wherein the device is configured to convert these parameters into an analog signal by internal calculations, preferably wherein a medium temperature is used for adjusting a transmitted signal value.

7. The device according to any of the preceding claims, comprising a measuring system, the measuring system comprising the electro-optical gas sensor, wherein all components of the measuring system are enclosed in a single housing.

8. The device according to any of the preceding claims, wherein the device is configured to perform system measurements related to the state of the electro-optical gas sensor and transmit data received from the system measurements in the form of an adjusted analog signal, preferably one or more of a low battery status, a device temperature outside of a predefined range, a presence of an electromagnetic interference or a software error.

9. The device according to any of the preceding claims, wherein the device is configured to perform linear or non-linear calibration of a received digital information before transmitting it into the analog signal.

10. The device according to any of the preceding claims, wherein the device is integrated in an electro-optical gas sensor, a receiving device or a constitute of a separate unit connected to both the electro-optical gas sensor and at least one receiving electronics.

11. The device according to claim 11, wherein the device is powered from the at least one receiving electronics, the digital sensors or an internal power source, preferably wherein the internal power source is rechargeable.

12. The device according to any of the preceding claims, wherein the device is configured to measure a change of at least one system parameter, and wherein the device is configured to use a pre-programmed threshold of the change of at least one system parameter to initialize at least one electro-optical gas sensor measurement and receive electronic activation.

13. The device according to any of the preceding claims, wherein the device is configured to monitor the analog output signal by measurements of an output signal for more precise galvanic sensor output emulation.

14. The device according to any of the preceding claims, wherein the device comprises a secondary ground circuit, wherein the secondary ground circuit is configured for producing output signals from 0 mV level, allowing the second ground at a different voltage level than the device electronics and digital input ground.

15. The device according to any of the preceding claims, wherein the device is a self powering device, and wherein the device has an integrated battery module and is configured to provide power for a digital oxygen sensor.
